# EUROPEAN PATENT APPLICATION

(11) **EP 4 549 181 A1**
(43) Date of publication of application: **07.05.2025**
(21) Application number: 22959870.1
(22) Date of filing: 27.09.2022
(51) Int. Cl.: B60H 1/00

(54) **THERMAL MANAGEMENT SYSTEM AND VEHICLE**

(71) Applicant: Shenzhen Yinwang Intelligent Technologies Co., Ltd., Shenzhen, Guangdong 518129 (CN)
(72) Inventor: LI, Hao, Shenzhen, Guangdong 518129 (CN); HU, Haomang, Shenzhen, Guangdong 518129 (CN)
(74) Representative: Gill Jennings & Every LLP
(86) International application number: PCT/CN2022/121896
(87) International publication number: WO 2024/065221

(57) **Abstract**

Embodiments of this application provide a thermal management system and a vehicle. The thermal management system includes a compressor, a first heat exchanger, a second heat exchanger, and a valve manifold. The first heat exchanger includes a first flow channel and a second flow channel that are isolated from each other, and the second heat exchanger includes a third flow channel and a fourth flow channel that are isolated from each other. An input end of the compressor is connected to an output end of the third flow channel and is configured to be connected to an output end of an evaporator core disposed on the vehicle, and an output end of the compressor is connected to an input end of the second flow channel. An input end of the first flow channel is configured to be connected to an output end of a heater core of the vehicle. An output end of the second flow channel is connected to an input end of the third flow channel, and the output end of the second flow channel is further configured to be connected to an input end of the evaporator core. The input end of the third flow channel is further configured to be connected to the output end of the evaporator core. The thermal management system can perform secondary heating on air entering a passenger compartment, to increase a temperature of warm air entering the passenger compartment and help increase a temperature in the passenger compartment.

## Description

### TECHNICAL FIELD

Embodiments of this application relate to the field of thermal management technologies, and in particular, to a thermal management system and a vehicle.

### BACKGROUND

A vehicle that uses a battery as an energy source has a high requirement on energy utilization due to a limitation of a battery level. In addition, a thermal management system of an electric vehicle not only needs to meet a heating requirement and a cooling requirement of a passenger compartment, but also needs to heat or cool a battery or an electric driver of the vehicle, to enable the battery or the electric driver to work within an appropriate temperature range.

Currently, a thermal management system with a heat pump or a heater is usually used to meet the heating requirement and the cooling requirement of the passenger compartment. However, when the heating requirement of the passenger compartment is met, although a temperature in the passenger compartment can be increased, the temperature in the passenger compartment is still low, and a heating requirement of a passenger cannot be met.

### SUMMARY

Embodiments of this application provide a thermal management system and a vehicle. The thermal management system can increase a temperature in a passenger compartment of the vehicle, and meet a warming requirement of a user.

A first aspect of embodiments of this application provides a thermal management system, including at least a first coolant loop and a second coolant loop. The first coolant loop includes a compressor, a first heat exchanger, and a second heat exchanger. The first heat exchanger includes a first flow channel and a second flow channel that are isolated from each other, and the second heat exchanger includes a third flow channel and a fourth flow channel that are isolated from each other. An input end of the compressor is connected to an output end of the third flow channel and is configured to be connected to an output end of an evaporator core disposed on a vehicle, and an output end of the compressor is connected to an input end of the second flow channel. An input end of the first flow channel is configured to be connected to an output end of a heater core of the vehicle. An output end of the second flow channel is connected to an input end of the third flow channel, and the output end of the second flow channel is further configured to be connected to an input end of the evaporator core. The input end of the third flow channel is further configured to be connected to the output end of the evaporator core. The second coolant loop includes a valve manifold having at least four interfaces. A first interface and a second interface of the valve manifold are respectively connected to an input end and an output end of the fourth flow channel, a third interface of the valve manifold is connected to an output end of the first flow channel, and a fourth interface of the valve manifold is configured to be connected to an input end of the heater core. The thermal management system is configured with at least a heat pump mode, and when the thermal management system operates in the heat pump mode, a first coolant in the first flow channel flows into the evaporator core and exchanges heat with air around the evaporator core, and the heat-exchanged first coolant returns to the compressor through the third flow channel. The air that has exchanged heat with the first coolant in the evaporator core further exchanges heat with a second coolant in the heater core.

When the thermal management system in this embodiment of this application operates in the heat pump mode, because the output end of the second flow channel is connected to the input end of the evaporator core, and the output end of the evaporator core is connected to the input end of the third flow channel, the first coolant in the second flow channel may enter the evaporator core after exchanging heat with the second coolant in the first flow channel, and the first coolant can exchange heat with the air around the evaporator core by using the evaporator core, to increase a temperature of the air around the evaporator core, and implement heating of the air for a first time. In addition, the second coolant in the heater core also exchanges heat with the air with which the first coolant in the evaporator core has exchanged heat, to implement heating of the air for a second time. Because a temperature of the first coolant in the evaporator core is lower than a temperature of the second coolant in the heater core, air entering a passenger compartment of the vehicle is first heated up by the evaporator core, and then the heated-up air is heated by the heater core, so that effect of "secondary heating" is achieved in an air heating process. Therefore, when the thermal management system is in the heat pump mode, the evaporator core may be reused as a preheater (condenser), so that the evaporator core and the heater core may perform secondary heating on the air entering the passenger compartment. This may improve a heating capacity and a coefficient of performance (COP) of the thermal management system, so that a temperature in the passenger compartment may be increased, and a warming requirement of a user may be met.

In a possible implementation, the first coolant loop further includes a first throttle valve and a second throttle valve. The output end of the second flow channel is connected to the input end of the evaporator core by using the first throttle valve. The input end of the third flow channel is connected to both the output end of the second flow channel and the output end of the evaporator core by using the second throttle valve. A flow volume of the first coolant flowing into the evaporator core may be controlled by using the first throttle valve, to enable heating effect of the evaporator core to meet a user requirement as much as possible. A flow volume of the first coolant flowing into the third flow channel may be controlled by using the second throttle valve. This helps improve use effect of the second heat exchanger.

In a possible implementation, the first coolant loop further includes a first stop valve and a second stop valve. The output end of the second flow channel is connected to the input end of the third flow channel by using the first stop valve. The input end of the compressor is connected to the output end of the evaporator core by using the second stop valve. A flow direction of the first coolant may be controlled through connection or disconnection of the first stop valve and/or the second stop valve, so that the thermal management system may be further configured with a cooling mode. When the thermal management system is in the cooling mode, at least the temperature in the passenger compartment can be decreased, and a cooling requirement of the user can be met.

In a possible implementation, the first coolant loop further includes a first one-way valve, the output end of the evaporator core is connected to the input end of the third flow channel by using the first one-way valve, and the first one-way valve is configured to enable the first coolant to flow from the output end of the evaporator core to the input end of the third flow channel. When the thermal management system operates in the heat pump mode, it can be ensured that the first coolant always flows from the evaporator core into the third flow channel. In addition, when a battery pack is separately cooled, the first one-way valve may prevent the first coolant from flowing from the third flow channel to the evaporator core. In addition, when the passenger compartment and the battery pack are cooled simultaneously, because a pressure at an outlet of the evaporator core is less than a pressure at the input end of the third flow channel, the first coolant cannot flow into the third flow channel from the evaporator core, and cannot flow into the evaporator core from the third flow channel (a function of one-way flow by using the first one-way valve). In addition, when the passenger compartment is separately cooled, the first coolant may flow from the evaporator core to the second throttle valve. However, because the second throttle valve is closed, the first coolant cannot flow into the third flow channel, so that a current function of the system is not affected.

In a possible implementation, the first coolant loop further includes a liquid storage tank, where an input end of the liquid storage tank is connected to the output end of the second flow channel, and an output end of the liquid storage tank is connected to both the input end of the third flow channel and the input end of the evaporator core. In this way, the liquid storage tank may adjust a total quantity of first coolant in the first coolant loop based on cooling effect or heating effect. For example, when the total quantity of first coolant decreases, the liquid storage tank may automatically store more of the first coolant.

In a possible implementation, the second coolant loop further includes an electric heater and a heater water pump. An input end of the electric heater is connected to an output end of the heater water pump, and an output end of the electric heater is connected to the input end of the heater core. An input end of the heater water pump is connected to the fourth interface of the valve manifold. The heater water pump may transport the second coolant to the heater core, to enable the second coolant to exchange heat with the air that has exchanged heat by using the heater core, and perform heating on the air entering the passenger compartment for a second time. The electric heater may increase the temperature of the second coolant, and help improve the heating effect of the thermal management system. For example, the electric heater may increase a heat exchange amount between the second coolant and the heat-exchanged air, and may further increase a temperature of the air entering the passenger compartment.

In a possible implementation, the valve manifold has at least six interfaces, and the second coolant loop further includes: an electric drive pipeline, an electric drive water pump, and an electric driver. An input end of the electric drive pipeline is connected to a fifth interface of the valve manifold, and an output end of the electric drive pipeline is connected to a sixth interface of the valve manifold. The electric drive water pump and the electric driver are separately connected in series on the electric drive pipeline. In this way, in addition to heating up or cooling down the passenger compartment, the thermal management system may further heat or cool down the electric driver, to enable the electric driver to work at a proper temperature.

In a possible implementation, the second coolant loop further includes a radiator. The input end of the electric drive pipeline is connected to the fifth interface of the valve manifold by using the radiator. In this way, the second coolant may exchange heat with air around the radiator by using the radiator, to control the temperature of the second coolant, for example, to increase the temperature of the second coolant or decrease the temperature of the second coolant.

In a possible implementation, the second coolant loop further includes a tank, where the tank is connected to the electric drive pipeline. Because the tank is a container with an opening at an upper end, gas may be filtered out by using the tank, and only the second coolant in a liquid state is allowed to circulate in the second coolant loop, to improve the cooling effect or the heating effect.

In a possible implementation, the second coolant loop further includes: a battery pipeline, a battery water pump, and a battery pack, and the valve manifold has at least eight interfaces. An input end and an output end of the battery pipeline are respectively connected to a seventh interface and an eighth interface of the valve manifold. The battery water pump and the battery pack are separately connected in series on the battery pipeline. In this way, in addition to heating or cooling the passenger compartment and the electric driver, the thermal management system may further heat or cool the battery pack, to increase or decrease a temperature of the battery pack, so that the thermal management system may further heat or cool at least one of the battery pack, the passenger compartment, and the electric driver.

In a possible implementation, the seventh interface of the valve manifold is further connected to the input end of the first flow channel by using a second one-way valve, and the second one-way valve is configured to enable the second coolant to flow from the seventh interface of the valve manifold to the input end of the first flow channel, so that a working condition of the thermal management system can be increased.

In a possible implementation, the second coolant loop further includes a three-way valve, an input end of the three-way valve is connected to the output end of the heater core, a first output end of the three-way valve is connected to the input end of the first flow channel, and a second output end of the three-way valve is connected to an input end of the battery water pump. In this way, in addition to returning to the valve manifold through the first flow channel, the second coolant in the heater core may further flow to the battery water pump by using the three-way valve, so that a working condition of the thermal management system may be increased.

In a possible implementation, the valve manifold is a nine-way valve, and a regulating structure of the valve manifold is implemented by using the nine-way valve. This may decrease pipeline design difficulty, reduce a volume occupied by the valve manifold, and help improve integration of the thermal management system.

In a possible implementation, the thermal management system further includes an integration unit. One or more of the valve manifold, the first heat exchanger, and the second heat exchanger are integrated in the integration unit. Some components of the thermal management system are integrated into the integration unit, so that a size of the thermal management system and a system pressure drop can be reduced. This helps improve system energy efficiency of the thermal management system. In addition, the thermal management system may be mounted in a modular manner.

A second aspect of embodiments of this application provides a vehicle, including a vehicle body and the thermal management system according to any implementation of the first aspect, where the thermal management system is mounted on the vehicle body. The vehicle body includes a passenger compartment, an air conditioning box, a heater core, and an evaporator core, where an air outlet of the air conditioning box communicates with the passenger compartment, the heater core is disposed in the air conditioning box and is close to the air outlet of the air conditioning box, and the evaporator core is disposed in the air conditioning box and is close to an air inlet of the air conditioning box. When the thermal management system operates in a heat pump mode, an output end of a second flow channel of the thermal management system is connected to an input end of the evaporator core, an output end of the evaporator core is connected to an input end of a third flow channel of the thermal management system, an output end of the third flow channel is connected to an input end of a compressor of the thermal management system, and an output end of the compressor is connected to an input end of the second flow channel.

### BRIEF DESCRIPTION OF DRAWINGS

FIG. 1 is a diagram of a structure of a thermal management system in a conventional technology;
FIG. 2 is a diagram of a structure of another thermal management system in a conventional technology;
FIG. 3 is a diagram of a structure of a thermal management system in a heat pump mode according to an embodiment of this application;
FIG. 4 is a diagram of a structure of another thermal management system in a heat pump mode according to an embodiment of this application;
FIG. 5 is a diagram of a structure of the thermal management system according to the embodiment shown in FIG. 3 when a first coolant is in a second flow direction loop;
FIG. 6 is a diagram of a structure of the thermal management system according to the embodiment shown in FIG. 3 when a first coolant is in a third flow direction loop;
FIG. 7 is a diagram of a structure of the thermal management system according to the embodiment shown in FIG. 3 when a first coolant is in a fourth flow direction loop;
FIG. 8 is a diagram of structures of a first loop and a second loop in the thermal management system according to the embodiment shown in FIG. 3;
FIG. 9 is a pressure-enthalpy diagram of a thermal management system using an all-pass throttle valve as a first throttle valve in a heat pump mode;
FIG. 10 is a pressure-enthalpy diagram of a thermal management system using a non-all-pass throttle valve as a first throttle valve in a heat pump mode;
FIG. 11 is a diagram of a structure of still another thermal management system according to an embodiment of this application;
FIG. 12 is a diagram of a structure of an integration unit according to an embodiment of this application;
FIG. 13 is a diagram of a structure of another integration unit according to an embodiment of this application;
FIG. 14 is a diagram of a structure of still another integration unit according to an embodiment of this application;
FIG. 15 is a diagram of a structure of yet another integration unit according to an embodiment of this application;
FIG. 16 is a diagram of a thermal management system in a working condition of heating a passenger compartment and heating a battery pack according to an embodiment of this application;
FIG. 17 is a diagram of a thermal management system in a working condition of heating a passenger compartment and cooling a battery pack according to an embodiment of this application;
FIG. 18 is a diagram of a thermal management system in a working condition of cooling a passenger compartment and cooling a battery pack according to an embodiment of this application; and
FIG. 19 is a diagram of a thermal management system in a working condition of naturally cooling a battery pack according to an embodiment of this application.

### Descriptions of reference numerals:

10: thermal management system;
20: first coolant loop;
21: compressor; 22: first heat exchanger; 23: second heat exchanger; 24: first throttle valve; 25: second throttle valve; 26: first stop valve; 27: second stop valve; 281: first one-way valve; 282: second one-way valve; 29: liquid storage tank;
30: second coolant loop;
31: valve manifold;
a1: first interface; a2: second interface; a3: third interface; a4: fourth interface; a5: fifth interface; a6: sixth interface; a7: seventh interface; a8: eighth interface; a9: ninth interface;
32: electric heater; 33: heater water pump;
34: electric drive pipeline; 35: electric drive water pump; 36: electric driver; 37: radiator; 38: tank;
39: battery pipeline; 40: battery water pump; 41: battery pack; 42: three-way valve;
43: heater core;
50: evaporator core;
60: air conditioning box;
70: air conditioning box fan;
80: cooling fan;
90: integration unit;
S1: heater loop; S2: electric drive loop; S3: battery loop; and S4: first loop.

### DESCRIPTION OF EMBODIMENTS

An electric vehicle that uses a battery as an energy source has a high requirement on energy utilization due to a limitation of a battery level. A thermal management system is an important component of the electric vehicle, and is responsible for ensuring comfort in a passenger compartment and thermal safety of an electric drive system and a battery system. Energy utilization efficiency of the thermal management system directly affects energy consumption and a battery life of the vehicle. In the thermal management system, a passenger compartment thermal management module with a largest energy consumption proportion has functions of cooling in summer and heating in winter.

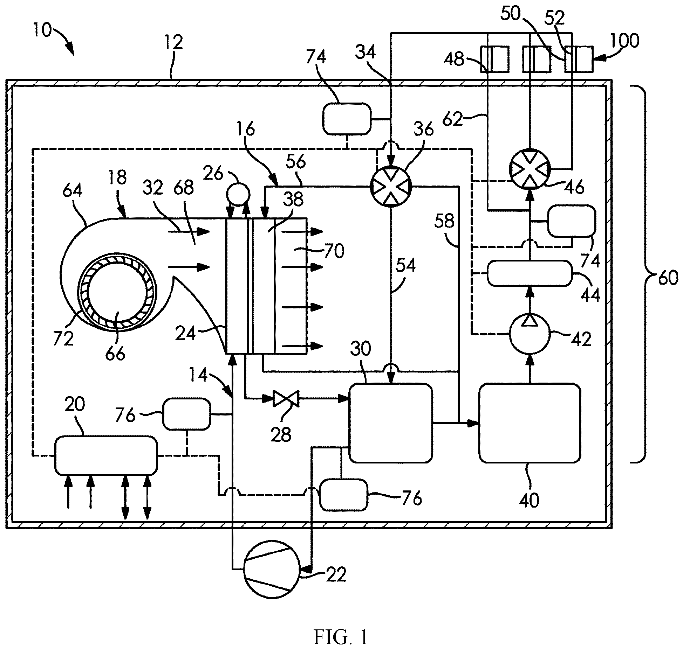

For example, FIG. 1 is a diagram of a structure of a thermal management system in a conventional technology. With reference to FIG. 1, the thermal management system in the conventional technology includes a housing 12 and a first loop 14 and a second loop 16 that are at least partially disposed in the housing 12. The first loop includes a compressor 22, a condenser 24, a liquid receiver 26, an electronic expansion valve 28, and a chiller 30 that are all disposed in series. The second loop 16 includes a water inlet 34, a first multi-way valve 36, a low-temperature radiator 38, the chiller 30, a water tank 40, a water pump 42, a PTC (Positive temperature efficiency, positive temperature coefficient heater) 44, a second multi-way valve 46, and a plurality of water outlets 48. An opening degree of the first multi-way valve 36 is controlled, to determine that a water path system passes through the low-temperature radiator 38 through a pipeline 56 to implement a low cooling mode, passes through the chiller 30 through a pipeline 54 to implement a high cooling mode, and directly returns to the water tank 40 through the PTC 44 and a pipeline 58 to implement a heating mode. Therefore, the thermal management system is configured with three modes: the high cooling mode, the low cooling mode, and the heating mode. However, the thermal management system has the following problems: 1. The thermal management system can only implement heating and cooling for components such as a battery and an electric driver, and cannot implement heating and cooling for a passenger compartment. 2. A heating function completely depends on a heater, and a coefficient of performance is low.

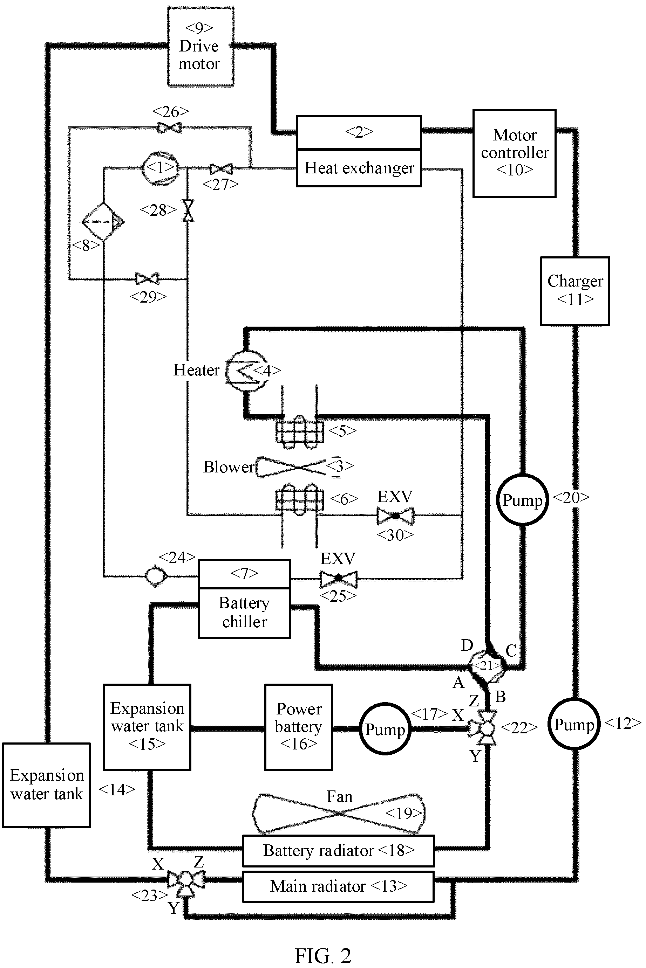

FIG. 2 is a diagram of a structure of another thermal management system in a conventional technology. With reference to FIG. 2, the thermal management system in the conventional technology may include an electric compressor 1, a plate heat exchanger 2, a first electronic expansion valve 30, a second electronic expansion valve 25, a battery chiller 7, a gas-liquid separator 8, a first electronic valve 27, a second electronic valve 29, a third electronic valve 28, a fourth electronic valve 26, a check valve 24, a first expansion water tank 14, a radiator, a first water pump 12, and a water path four-way valve 21. The plate heat exchanger 2 serves as a condenser in a cooling mode, to take away heat through an electric drive water loop. When the plate heat exchanger 2 serves as an evaporator in a heating mode, waste heat recovery can be performed on heat generated by electric drive. However, although the thermal management system can heat a passenger compartment, heating energy efficiency is low as both the passenger compartment and a battery are heated by using a heater (for example, a PTC). In addition, the entire thermal management system has mounted components and pipelines that are relatively scattered due to low integration.

However, the heater adopts a heating principle of converting electric energy into heat energy, has advantages such as a high heating rate and low costs, and has a disadvantage of low energy utilization as a coefficient of performance COP of the heater is less than 1. Therefore, for an electric vehicle using a thermal management solution in a PTC heating manner, an endurance mileage in winter is greatly reduced, for example, reduced by at least 30%. In addition, with development of the electric vehicle market, consumers are increasingly sensitive to the endurance mileage of the electric vehicle. This requires the electric vehicle to implement a more efficient heating manner in winter. In view of this, some thermal management systems in the conventional technology alternatively use a heat pump heating technology to meet a heating requirement of the passenger compartment.

The heat pump heating technology means that a refrigerant in a form of steam is compressed by a compressor to work, heat of the high-temperature high-pressure refrigerant is released to the passenger compartment, and then after being throttled and expanded by an expansion valve, the refrigerant absorbs heat from an outdoor low-temperature environment, and then returns to the compressor for compression. From a perspective of energy conservation, a heat pump system improves an energy level of heat in the outdoor low-temperature ambient air through compression of the compressor, and then releases the heat to a place that requires heat, such as the passenger compartment or a battery pack. Because "free" heat is absorbed from the environment, a coefficient of performance COP of the heat pump heating technology is far higher than the coefficient of performance COP of the heater, and may reach at least 2.0 or higher, so that effect of saving energy and improving the endurance mileage of the electric vehicle is implemented.

However, in a low-temperature environment, although the heat pump system can increase a temperature in the passenger compartment, when the thermal management system with a heat pump in the conventional technology heats the passenger compartment, an insufficient heating capacity leads to a low temperature of warm air entering the passenger compartment. In this case, the temperature in the passenger compartment is still low due to a small temperature rise in the passenger compartment, and a heating requirement of a user cannot be fully met.

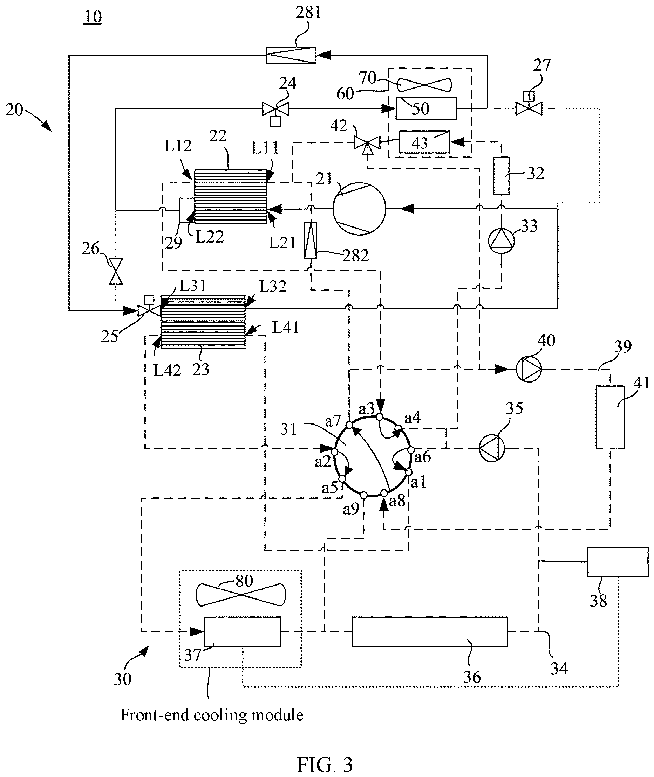

In view of this, an embodiment of this application provides a vehicle. The vehicle may include a vehicle body and a thermal management system 10. The vehicle body may include an air conditioning box 60, a heater core 43, and an evaporator core 50. An air outlet of the air conditioning box 60 communicates with a passenger compartment, the heater core 43 is disposed in the air conditioning box 60 and is close to the air outlet of the air conditioning box 60, and the evaporator core 50 is disposed in the air conditioning box 60 and is close to an air inlet of the air conditioning box 60. With reference to FIG. 3, the thermal management system 10 may include a first coolant loop 20 and a second coolant loop 30. The heater core 43 is disposed in the second coolant loop 30, and the evaporator core 50 is disposed in the first coolant loop 20. The thermal management system 10 is configured with at least a heat pump mode. When the thermal management system 10 operates in the heat pump mode, a first coolant may first exchange heat, by using the evaporator core 50, for a first time with air entering the passenger compartment, to perform heating on the air entering the passenger compartment for a first time; and a second coolant may exchange heat, by using the heater core 43, for a second time with the air that has performed the first heat exchange, to perform heating on the air entering the passenger compartment for a second time. In the heat pump mode, because a temperature of the first coolant in the evaporator core 50 is lower than a temperature of the second coolant in the heater core 43 and is higher than a temperature of air entering the air conditioning box 60 from the air inlet, effect of "secondary heating" is implemented in a heating process of the air entering the passenger compartment, the temperature of the air entering the passenger compartment may be increased, and then a temperature in the passenger compartment may be increased. This improves comfort of a user.

In the heat pump mode, the evaporator core 50 is reused as a preheater (condenser), and the first coolant releases heat by using the evaporator core 50, to heat the air entering the passenger compartment for a first time. Therefore, the heater core 43 and the evaporator core 50 can cooperate with each other to increase a system heating capacity of the thermal management system 10. In addition, because the thermal management system 10 uses a heat pump system to meet a heating requirement of the passenger compartment, a coefficient of performance COP of the management system may be improved.

It may be understood that a mode in which the thermal management system 10 in this embodiment of this application may operate is not limited to the heat pump mode. For example, the thermal management system 10 may be further configured with a cooling mode. In the cooling mode, at least the passenger compartment may be cooled. For detailed descriptions, refer to the following content.

In some embodiments, the heater core 43 and the evaporator core 50 may alternatively be included in the thermal management system 10. In this case, the thermal management system 10 may include at least the first coolant loop 20, the second coolant loop 30, the evaporator core 50, and the heater core 43. Certainly, the evaporator core 50 may alternatively serve as a part of the first coolant loop 20. That is, the first coolant loop 20 may include the evaporator core 50. Similarly, the heater core 43 may alternatively serve as a part of the second coolant loop 30. That is, the second coolant loop 30 may include the heater core 43.

Even, in some embodiments, the air conditioning box 60 may alternatively be included in the thermal management system 10. In this case, the thermal management system 10 may include an air conditioning box system, the first coolant loop 20, and the second coolant loop 30. The air conditioning box 60 system may include the air conditioning box 60, the heater core 43, and the evaporator core 50.

Still with reference to FIG. 3, in some embodiments, an air conditioning box fan 70 may be further disposed in the air conditioning box 60. The air conditioning box fan 70 may directly blow ambient air (being neither cooled down nor heated up) to the passenger compartment, may blow ambient air cooled down by the evaporator core 50 into the passenger compartment, or may blow ambient air heated by the evaporator core 50 and the heater core 43 into the passenger compartment.

The following describes an implementation of the thermal management system 10 that does not include the heater core 43, the evaporator core 50, and the air conditioning box 60 and that is provided in this embodiment of this application.

FIG. 3 is a diagram of a structure of a thermal management system in a heat pump mode according to an embodiment of this application. As shown in FIG. 3, the thermal management system 10 provided in this embodiment of this application may include a first coolant loop 20 and a second coolant loop 30. A circulating medium in the first coolant loop 20 is a first coolant. A circulating medium in the second coolant loop 30 is a second coolant. It should be noted that, in this embodiment of this application, the first coolant may include but is not limited to a refrigerant such as a refrigerant R134a, R744 (carbon dioxide), R718 (water), R290 (propane), R717 (ammonia), R410a, R32, R1234yf, R502, R12, R22, R407c, and R600a, or a combination of any two or more of these refrigerants. The second coolant may include but is not limited to water, antifreeze, ethylene glycol, or the like. For example, the first coolant may be a refrigerant R134a, and the second coolant may be a cooling liquid.

Still with reference to FIG. 3, the first coolant loop 20 may include a compressor 21, a first heat exchanger 22, and a second heat exchanger 23. The first heat exchanger 22 includes a first flow channel and a second flow channel that are isolated from each other. The second heat exchanger 23 includes a third flow channel and a fourth flow channel that are isolated from each other. An input end of the compressor 21 is connected to an output end L32 of the third flow channel and is configured to be connected to an output end of an evaporator core 50, and an output end of the compressor 21 is connected to an input end L21 of the second flow channel. An input end L11 of the first flow channel is configured to be connected to an output end of a heater core 43. An output end L22 of the second flow channel is connected to an input end L31 of the third flow channel, and the output end L22 of the second flow channel is further configured to be connected to an input end of the evaporator core 50. The input end L31 of the third flow channel is further configured to be connected to the output end of the evaporator core 50.

Still with reference to FIG. 3, the second coolant loop 30 may include a valve manifold 31 having at least four interfaces. A first interface a1 and a second interface a2 of the valve manifold 31 are respectively connected to an input end L41 and an output end L42 of the fourth flow channel, a third interface a3 of the valve manifold 31 is connected to an output end L12 of the first flow channel, and a fourth interface a4 of the valve manifold 31 is configured to be connected to an input end of the heater core 43.

A quantity of interfaces of the valve manifold 31 may be a value such as 4, 5, 6, 7, 8, or 9. This is not limited herein. The quantity of interfaces may be determined based on a use requirement of the thermal management system 10. In addition, the valve manifold 31 may include at least one valve having a plurality of interfaces, or may be set as a combination of a plurality of valves, for example, a four-way valve, a five-way valve, or a nine-way valve. Alternatively, the valve manifold 31 may include two three-way valves.

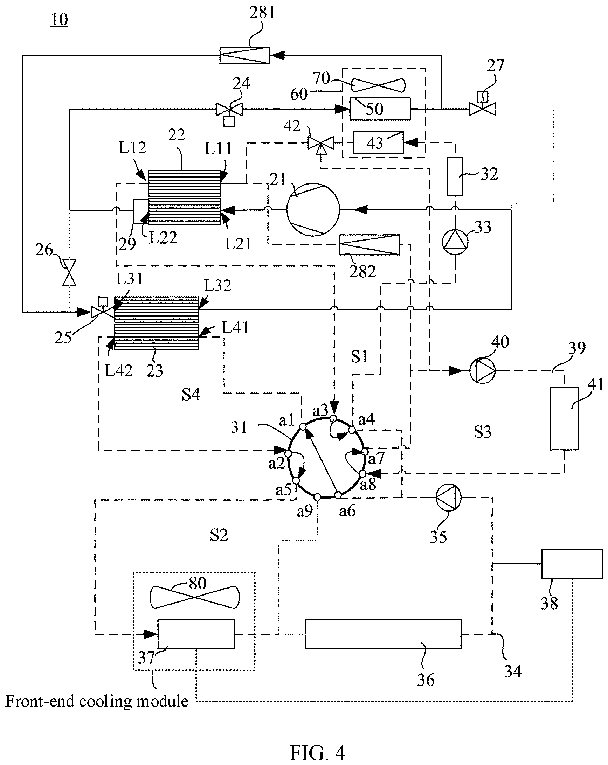

The plurality of interfaces are connected to each other by using an internal structure of the valve manifold 31. For example, as shown in FIG. 3, the first interface a1 is connected to a sixth interface a6, the second interface a2 is connected to a fifth interface a5, the third interface a3 is connected to the fourth interface a4, and a seventh interface a7 is connected to an eighth interface a8. Certainly, a connection relationship of the interfaces is not limited to the connection relationship shown in FIG. 3. In addition, a location of each interface is not limited to that shown in FIG. 3. The location of each interface in FIG. 3 is merely an example. For example, FIG. 4 is a diagram of a structure of another thermal management system in a heat pump mode according to an embodiment of this application. As shown in FIG. 4, a location of each interface of the valve manifold 31 is different from the location of each interface in FIG. 3.

The output end L22 of the second flow channel is connected to both the input end L31 of the third flow channel and the input end of the evaporator core 50. Therefore, the output end L22 of the second flow channel may be connected to the input end L31 of the third flow channel, the output end L22 of the second flow channel may be connected to the input end of the evaporator core 50, or the output end L22 of the second flow channel may be connected to both the input end L31 of the third flow channel and the input end of the evaporator core 50. Therefore, there are two flow directions of the first coolant flowing out of the second flow channel: One is that the first coolant flows into the third flow channel, exchanges heat with the second coolant in the fourth flow channel, and then returns to the compressor 21; and the other is that the first coolant flows into the evaporator core 50, and exchanges heat with air around the evaporator core 50. There are also two flow directions of the heat-exchanged first coolant: One is that the first coolant returns to the compressor 21; and the other is that the first coolant flows into the third flow channel, exchanges heat with the second coolant in the fourth flow channel, and then returns to the compressor 21. It may be learned that, a plurality of flow direction loops may be formed in the first coolant loop 20, to meet different use requirements. For example,
when the flow direction of the first coolant may be a first flow direction loop, still with reference to FIG. 3 or FIG. 4, the output end L22 of the second flow channel is not connected to the input end L31 of the third flow channel, the output end of the evaporator core 50 is not connected to the input end of the compressor 21, the output end of the evaporator core 50 is connected to the input end L31 of the third flow channel, and the output end L32 of the third flow channel is connected to the input end of the compressor 21. After being compressed by the compressor 21, the first coolant in the first flow direction loop enters the second flow channel and exchanges heat with the second coolant in the first flow channel. The heat-exchanged first coolant flows into the evaporator core 50 and exchanges heat with the air around the evaporator core 50. In addition, the heat-exchanged first coolant flows into the third flow channel from the output end of the evaporator core 50, and the first coolant in the third flow channel exchanges heat with the second coolant in the fourth flow channel and then returns to the compressor 21.

When a temperature of an external environment in which a vehicle is located is low, and heating is required in a passenger compartment, the thermal management system 10 operates in a heat pump mode, and the flow direction of the first coolant is the first flow direction loop. Because air entering an air conditioning box 60 is low-temperature air, and a temperature of the air is lower than that of the first coolant in the evaporator core 50, the low-temperature air passing through the evaporator core 50 may be heated. After the first coolant in the second flow channel exchanges heat for a first time with the second coolant in the first flow channel, heat of the first coolant is transferred to the second coolant, to decrease the temperature of the first coolant, and increase a temperature of the second coolant. After the first coolant exchanges heat, by using the evaporator core 50, for a second time with air entering the passenger compartment, the heat in the first coolant is transferred to the air around the evaporator core 50, to continue to decrease the temperature of the first coolant, and increase a temperature of the air around the evaporator core 50. When the first coolant in the third flow channel exchanges heat for a third time with the second coolant in the fourth flow channel, the first coolant absorbs heat carried by the second coolant, to increase the temperature of the first coolant, and decrease the temperature of the second coolant.

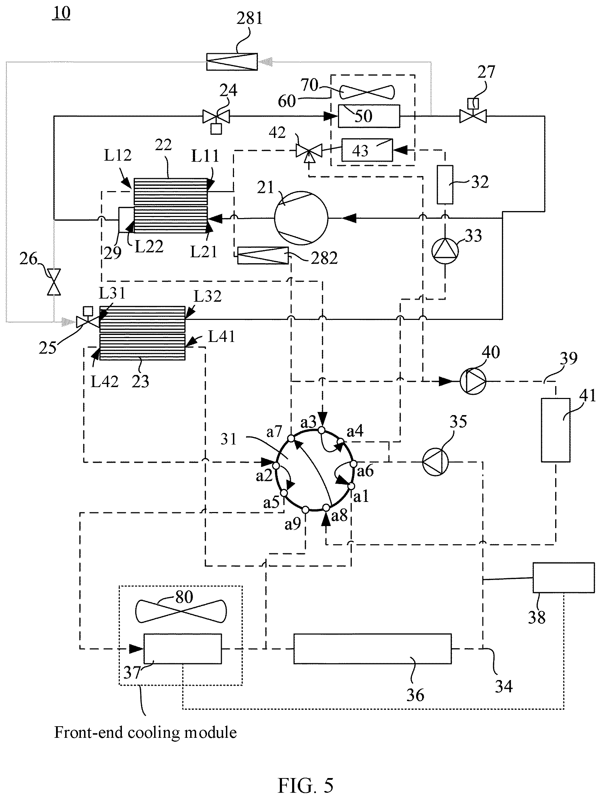

FIG. 5 is a diagram of a structure of the thermal management system according to the embodiment shown in FIG. 3 when a first coolant is in a second flow direction loop. With reference to FIG. 5, when the flow direction of the first coolant may be the second flow direction loop, the output end L22 of the second flow channel is not connected to the input end L31 of the third flow channel, the output end of the evaporator core 50 is connected to the input end of the compressor 21, the output end of the evaporator core 50 is not connected to the input end L31 of the third flow channel, and the output end L32 of the third flow channel is connected to the input end of the compressor 21. In this case, after being compressed by the compressor 21, the first coolant in the second flow direction loop enters the second flow channel and exchanges heat with the second coolant in the first flow channel. The heat-exchanged first coolant flows into the evaporator core 50, exchanges heat with the air around the evaporator core 50, and then returns to the compressor 21. The second flow direction loop may implement separate cooling for the passenger compartment.

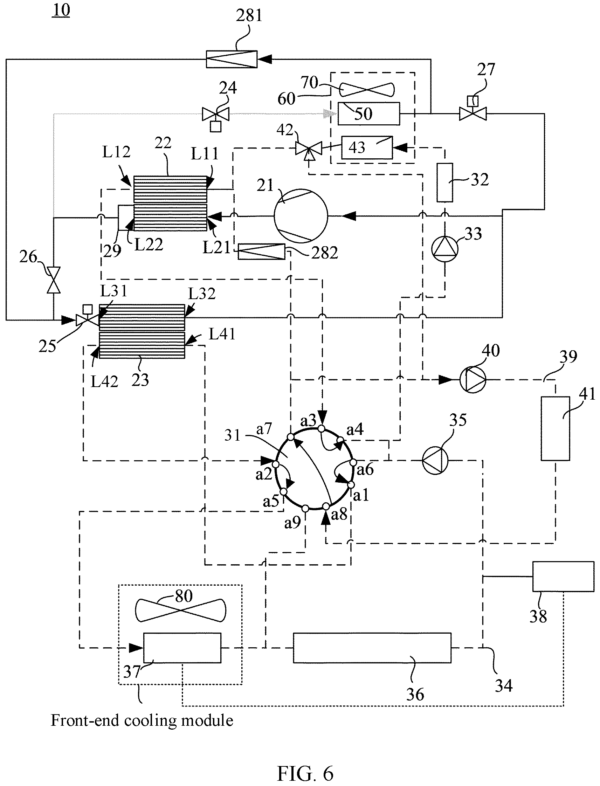

FIG. 6 is a diagram of a structure of the thermal management system according to the embodiment shown in FIG. 3 when a first coolant is in a third flow direction loop. With reference to FIG. 6, when the flow direction of the first coolant may be the third flow direction loop, the output end L22 of the second flow channel is connected to the input end L31 of the third flow channel, the output end L32 of the third flow channel is connected to the input end of the compressor 21, and the output end of the compressor 21 is connected to the input end L21 of the second flow channel. In this case, after being compressed by the compressor 21, the first coolant in the second flow direction loop enters the second flow channel and exchanges heat with the second coolant in the first flow channel. The heat-exchanged first coolant flows into the third flow channel, exchanges heat with the second coolant in the fourth flow channel, and then returns to the compressor 21.

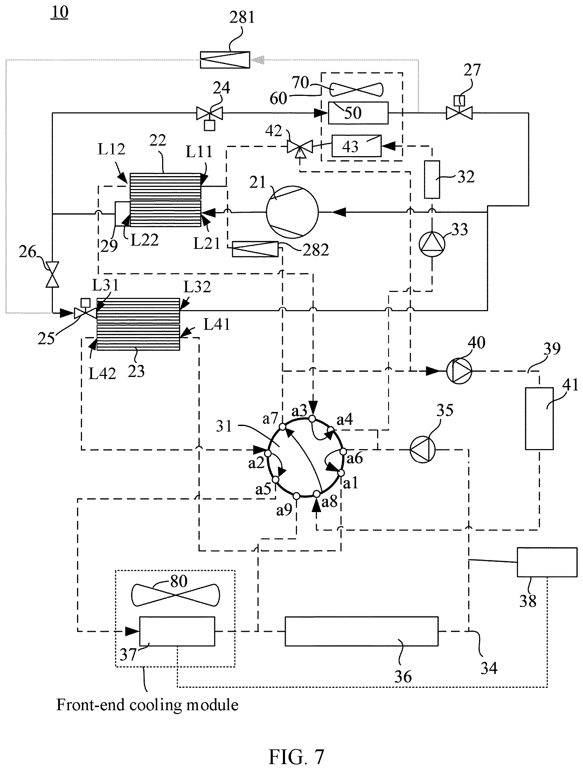

FIG. 7 is a diagram of a structure of the thermal management system according to the embodiment shown in FIG. 3 when a first coolant is in a fourth flow direction loop. With reference to FIG. 7, the flow direction of the first coolant may alternatively be the fourth flow direction loop, where the fourth flow direction loop includes the second flow direction loop and the third flow direction loop, and the second flow direction loop and the third flow direction loop are in the fourth flow direction loop. There are two flow directions of the first coolant flowing out of the second flow channel: One is that the first coolant flows into the third flow channel; and the other is that the first coolant flows into the evaporator core 50. A flow volume of the first coolant flowing into the third flow channel and a flow volume of the first coolant flowing into the evaporator core 50 may be determined based on an actual requirement. This is not limited herein.

It may be understood that the flow direction of the first coolant is not limited to the foregoing several flow direction loops.

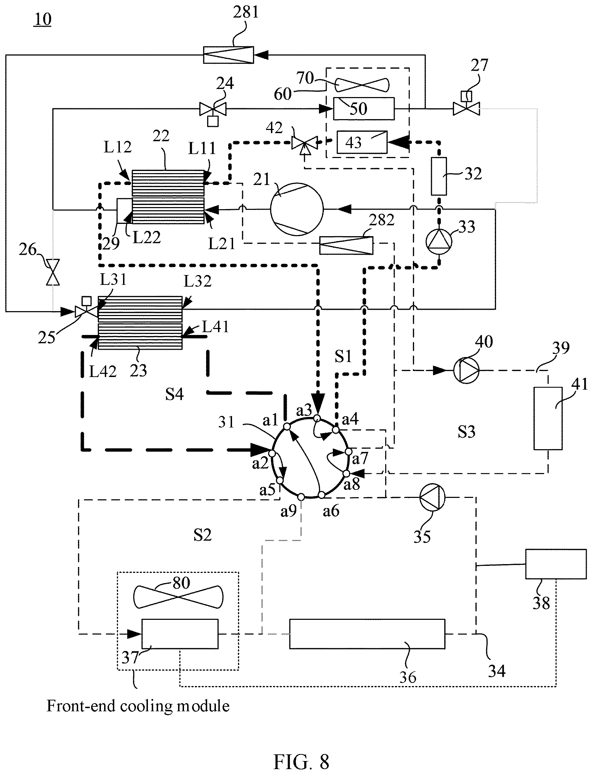

FIG. 8 is a diagram of structures of a first loop and a second loop in the thermal management system according to the embodiment shown in FIG. 3. With reference to FIG. 8, the flow direction of the second coolant may include but is not limited to the following loops: a first loop S4, where the second coolant in the loop flows from the output end L42 of the fourth flow channel into the second interface a2 of the valve manifold 31, and then the second coolant flows from the first interface a1 of the valve manifold 31 to the fourth flow channel through an internal path of the valve manifold 31; and a second loop (as shown in S1 in the figure), where the second coolant in the loop first flows into the heater core 43, then the second coolant flows into the first flow channel from the heater core 43, the second coolant in the first flow channel flows into the third interface a3 of the valve manifold 31, and then the second coolant flows into the heater core 43 again from the fourth interface a4 of the valve manifold 31 through an internal path of the valve manifold 31.

It may be understood that, a loop in which the second coolant flows is not limited to the first loop and the second loop. For example, with reference to FIG. 8, the loop in which the second coolant flows may alternatively be a loop such as an electric drive loop S2 and a battery loop S3.

When there are a plurality of loops in which the second coolant flows, the plurality of loops may be connected in series and parallel by using the valve manifold 31. That is, the plurality of interfaces may have a plurality of connection modes by using an internal structure of the valve manifold 31, to implement a series-parallel connection of the plurality of loops, so that heating or cooling may be performed on different components or a same component. For example, the thermal management system 10 may further heat or cool a battery pack 41.

In embodiments of this application, the thermal management system 10 may be configured with a running mode such as a heat pump mode or a cooling mode. When operating in the heat pump mode, the thermal management system 10 may heat at least the passenger compartment, to increase a temperature in the passenger compartment. When operating in the cooling mode, the thermal management system 10 may cool at least the passenger compartment, to decrease the temperature in the passenger compartment.

When the thermal management system 10 operates in the heat pump mode, the flow direction of the first coolant is the first flow direction loop, and the flow direction of the second coolant may include the first loop S4 and the second loop. For example, in some instances, the first coolant passes through the compressor 21 and enters the second flow channel to release heat and increase the temperature of the second coolant in the first flow channel. The heat-released first coolant enters the evaporator core 50 to release heat again to increase the temperature of the air around the evaporator core 50 (the low-temperature air entering the air conditioning box 60). The heat-released first coolant enters the third flow channel again to absorb heat to decrease the temperature of the second coolant in the fourth flow channel, and the heat-absorbed first coolant returns to the input end of the compressor 21. After the second coolant is heated by the first heat exchanger 22, the temperature of the second coolant is increased, and the second coolant whose temperature is increased enters the heater core 43 by using the valve manifold 31 and releases heat, to increase the temperature of the air heated by the evaporator core 50. Because the temperature of the first coolant in the evaporator core 50 is lower than the temperature of the second coolant in the heater core 43 and is higher than the temperature of the low-temperature air, effect of "secondary heating" is implemented in a heating process of the air. Therefore, when the thermal management system 10 operates in the heat pump mode, the evaporator core 50 is reused as a preheater (condenser). The low-temperature air entering the passenger compartment is first heated by the evaporator core 50, and then heated by the heater core 43, to implement secondary heating of the air, so that the temperature of the air entering the passenger compartment may be increased, and the temperature in the passenger compartment may be increased.

Still with reference to FIG. 3, in some possible implementations, the first coolant loop 20 may further include a first throttle valve 24 and a second throttle valve 25. The output end L22 of the second flow channel is connected to the input end of the evaporator core 50 by using the first throttle valve 24. The input end L31 of the third flow channel is connected to both the output end L22 of the second flow channel and the output end of the evaporator core 50 by using the second throttle valve 25. An opening degree of the first throttle valve 24 is controlled, to control a flow volume of the first coolant flowing into the evaporator core 50. An opening degree of the second throttle valve 25 is controlled, to control a flow volume of the first coolant flowing into the third flow channel. Therefore, different use requirements may be met by controlling the first throttle valve 24 and the second throttle valve 25.

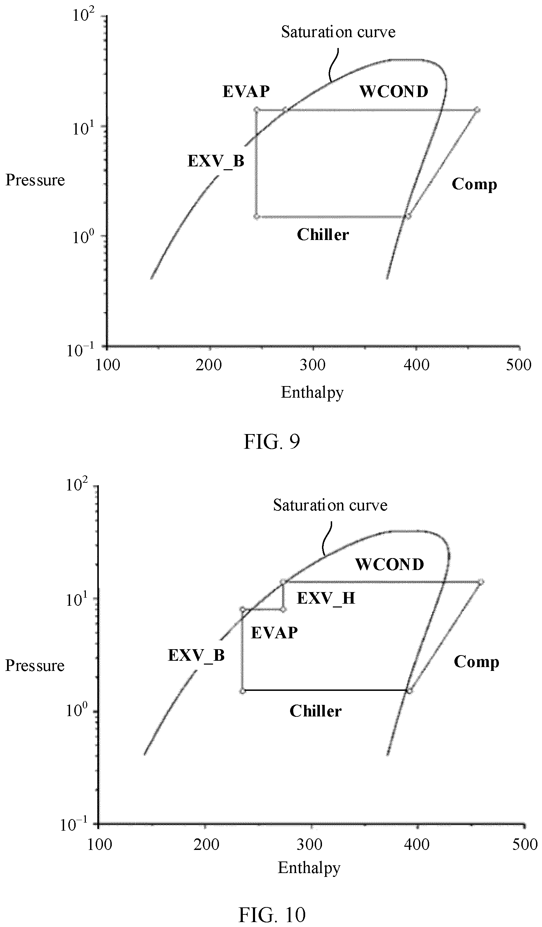

In some instances, the first throttle valve 24 may be an all-pass throttle valve. That is, when the first throttle valve 24 is fully opened, an inner diameter of the first throttle valve 24 is the same as that of a pipeline, the first coolant has no pressure drop loss after passing through the first throttle valve 24, and no throttling effect is generated. FIG. 9 is a pressure-enthalpy diagram of a thermal management system using an all-pass throttle valve as a first throttle valve in a heat pump mode. In FIG. 9, EXV_B represents the second throttle valve 25, EVAP represents the evaporator core 50, WCOND represents the first heat exchanger 22, Comp represents the compressor 21, and chiller represents the second heat exchanger 23. A saturation curve is an inherent attribute of the first coolant, and each side of a trapezoid represents a process in a corresponding element. In addition, the saturation curve and the trapezoid form three rings. The ring on a left side indicates that the first coolant is completely in a liquid state, the ring in the middle indicates that the first coolant is in a gas-liquid two-phase state, and the ring on a right side indicates that the first coolant is completely in a gas state. Because the first coolant has no throttling effect in the all-pass throttle valve, no pressure drop is generated in FIG. 9.

Certainly, in some instances, the first throttle valve 24 may alternatively be a non-all-pass throttle valve. That is, when the first throttle valve 24 is fully opened, the first coolant still has a pressure drop loss after passing through the first throttle valve 24, and throttling effect is still generated. FIG. 10 is a pressure-enthalpy diagram of a thermal management system using a non-all-pass throttle valve as a first throttle valve in a heat pump mode. In FIG. 10, EXV_H represents the first throttle valve 24. It may be learned from FIG. 10 that, the first coolant experiences throttling effect in the first throttle valve 24, and generates a pressure drop in the pressure-enthalpy diagram. The first coolant is in the evaporator core 50 after pressure reduction. Because the temperature of the first coolant is higher than an air intake temperature when the air enters the air conditioning box 60, the first coolant dissipates heat to the air, the temperature of the first coolant is further decreased, and the air entering the air conditioning box 60 is preheated.

Still with reference to FIG. 3, in some possible implementations, the first coolant loop 20 may further include a first stop valve 26 and a second stop valve 27. The output end L22 of the second flow channel is connected to the input end L31 of the third flow channel by using the first stop valve 26. The input end of the compressor 21 is connected to the output end of the evaporator core 50 by using the second stop valve 27. The flow direction of the first coolant may be controlled by controlling connection or disconnection of the first stop valve 26 and/or the second stop valve 27. For example, when both the first stop valve 26 and the second stop valve 27 are disconnected, the flow direction of the first coolant may be the first flow direction loop.

Still with reference to the figure, in some possible implementations, the first coolant loop 20 may further include a first one-way valve 281. The output end of the evaporator core 50 is connected to the input end L31 of the third flow channel by using the first one-way valve 281. The first one-way valve 281 is configured to enable the first coolant to flow from the output end of the evaporator core 50 to the input end L31 of the third flow channel. When the thermal management system 10 operates in the heat pump mode, it can be ensured that the first coolant always flows from the evaporator core 50 into the third flow channel. In addition, when the evaporator core 50 serves as an evaporator, and the output end of the evaporator core 50 is connected to the input end of the compressor 21, the first one-way valve 281 may play a role of disconnecting the flow of the first coolant from the evaporator core 50 into the third flow channel. That is, the first one-way valve 281 has a disconnection function. A principle of the disconnection function is as follows: A pressure of the first coolant flowing out of the evaporator core 50 is small, and is insufficient to pass through resistance generated by a mechanical structure inside the first one-way valve 281. Therefore, the first coolant cannot flow into the third flow channel.

Still with reference to FIG. 3, in some possible implementations, the first coolant loop 20 may further include a liquid storage tank 29, where an input end of the liquid storage tank 29 is connected to the output end L22 of the second flow channel, and an output end of the liquid storage tank 29 is connected to both the input end L31 of the third flow channel and the input end of the evaporator core 50. In this way, the liquid storage tank 29 may adjust a total quantity of first coolant in the first coolant loop 20 based on cooling effect or heating effect. For example, when the total quantity of first coolant decreases, the liquid storage tank 29 may automatically store more of the first coolant, to ensure normal supply of the first coolant.

Still with reference to FIG. 4, in some possible implementations, the second coolant loop 30 may further include an electric heater 32 and a heater water pump 33. An input end of the electric heater 32 is connected to an output end of the heater water pump 33, and an output end of the electric heater 32 is connected to the input end of the heater core 43. An input end of the heater water pump 33 is connected to the fourth interface a4 of the valve manifold 31. The heater water pump 33 may transport the second coolant to the heater core 43, to enable the second coolant to exchange heat by using air around the heater core 43, and perform heating on the air entering the passenger compartment for a second time. When the temperature of the second coolant is not high, the temperature of the second coolant may be increased by using the electric heater 32, so that a heat exchange amount between the second coolant and the heat-exchanged air may be increased, and the temperature of the air entering the passenger compartment may be increased. This helps further improve heating effect of the thermal management system 10.

In a process of heating the passenger compartment, if a temperature of warm air heated by the heater core 43 is appropriate, the electric heater 32 may be turned off, and the electric heater 32 does not need to work. Certainly, in some instances, the electric heater 32 may alternatively be removed.

In this embodiment of this application, the electric heater 32 may be a PTC (Positive temperature efficiency, positive temperature coefficient heater). Specifically, the electric heater 32 may be a water-cooled positive temperature coefficient heater WPTC or an air-cooled positive temperature coefficient heater APTC. This is not limited herein.

It may be understood that a loop in which the second coolant flows and that has the heater core 43, the valve manifold 31, and the first flow channel may also be referred to as a heater loop S1 (the second loop in the foregoing content). As the name suggests, the heater loop S1 may be configured to heat the passenger compartment. In addition, the electric heater 32 and the heater water pump 33 are also included in the heater loop S1.

Still with reference to FIG. 3 or FIG. 4, in some possible implementations, the valve manifold 31 has at least six interfaces, and the second coolant loop 30 may further include: an electric drive pipeline 34, an electric drive water pump 35, and an electric driver 36. An input end of the electric drive pipeline 34 is connected to the fifth interface a5 of the valve manifold 31, and an output end of the electric drive pipeline 34 is connected to the sixth interface a6 of the valve manifold 31. The electric drive water pump 35 and the electric driver 36 are separately connected in series on the electric drive pipeline 34. In this way, in addition to heating up or cooling down the passenger compartment, the thermal management system 10 may further cool down the electric driver 36, to enable the electric driver 36 to work at a proper temperature.

With reference to FIG. 4, an output end of the electric driver 36 may be connected to an input end of the electric drive water pump 35 through a part of the electric drive pipeline 34, or an input end of the electric driver 36 may be connected to an output end of the electric drive water pump 35 through a part of the electric drive pipeline 34. This is not limited herein.

In this embodiment of this application, the electric driver 36 may include but is not limited to a power distribution unit (power distribution unit, PDU), a microcontroller unit (microcontroller unit, MCU), a mapped diagnostic context (Mapped Diagnostic Context, MDC), a motor, and the like.

The second coolant may flow into the electric drive pipeline 34 from the fifth interface a5 of the valve manifold 31, then pass through the electric drive water pump 35 and the electric driver 36, and finally return to the valve manifold 31 from the sixth interface a6 of the valve manifold 31. The second coolant flowing into the electric drive pipeline 34 is the second coolant flowing into the valve manifold 31 in the fourth flow channel.

The second coolant flowing into the electric drive pipeline 4 may be the second coolant in the fourth flow channel. In view of this, in some examples, with reference to FIG. 4, the second interface a2 of the valve manifold 31 may be connected to the fifth interface a5 of the valve manifold 31 through an internal path of the valve manifold 31, and the sixth interface a6 of the valve manifold 31 is connected to the first interface a1 of the valve manifold 31 through an internal path of the valve manifold 31.

Certainly, a loop in which the second coolant flows and that has the electric drive pipeline 34, the electric drive water pump 35, and the electric driver 36 may be referred to as an electric drive loop S2. The second coolant in the electric drive loop S2 may cool down the electric driver 36, to enable the electric driver 36 to be in a proper temperature range.

Still with reference to FIG. 3 or FIG. 4, in some instances, the output end of the electric drive pipeline 34 may alternatively be connected to the input end of the heater core 43, so that the second coolant in the heater core 43 may flow out from the valve manifold 31 and then enter the electric drive pipeline 34. In this way, a quantity of loops in which the second coolant flows may be increased. This helps increase modes in which the thermal management system 10 can operate.

One of functions of connecting the output end of the electric drive pipeline 34 to the output end of the heater core 43 is: When the passenger compartment is heated, the output end of the electric drive pipeline 34 may be further connected to the input end of the heater core 43, the second coolant expands in the heater loop S1, a part of the second coolant in the heater loop S1 may enter the electric drive loop S2 and finally enter a tank 38, to avoid damage to a pipeline of the heater loop S1.

It may be understood that, that the output end of the electric drive pipeline 34 is further connected to the input end of the heater core 43 is not conducted by using the valve manifold 31. For example, in FIG. 3 or FIG. 4, the output end of the electric drive pipeline 34 may be connected to the input end of the heater core 43 by using a pipeline. In other words, the fourth interface a4 of the valve manifold 31 is connected to the sixth interface a6 of the valve manifold 31 by using a pipeline.

Still with reference to FIG. 3 or FIG. 4, in some possible implementations, the second coolant loop 30 may further include a radiator 37. The input end of the electric drive pipeline 34 is connected to the fifth interface a5 of the valve manifold 31 by using the radiator 37. In this way, the second coolant may exchange heat with air around the radiator 37 by using the radiator 37, to control the temperature of the second coolant.

The second coolant exchanges heat with air in an environment in which a front-end cooling module is located by using the radiator 37, to increase or decrease the temperature of the second coolant. For example, when the temperature of the second coolant in winter is lower than an environmental temperature (the temperature of the environment in which the front-end cooling module is located), the second coolant may be heated up based on the environmental temperature. For example, when the temperature of the second coolant in summer is higher than the environmental temperature, the second coolant may be cooled down based on the environmental temperature.

It may be understood that the radiator 37 may also be included in the foregoing electric drive loop S2.

In addition to controlling the temperature of the second coolant, the radiator 37 may further implement natural cooling of the electric driver 36. For example, in some embodiments, the fifth interface a5 and the sixth interface a6 of the valve manifold 31 are connected through a path inside the valve manifold 31, and heat generated by the electric driver 36 during operation is taken away by the second coolant, then enters the radiator 37, and is dissipated by the radiator 37 to an environment around the front-end cooling module, to implement natural cooling of the electric driver 36.

When the radiator 37 exists in the electric drive loop S2, the fifth interface a5 of the valve manifold 31 is connected to the electric drive pipeline 34 by using the radiator 37. Still with reference to FIG. 3 or FIG. 4, in some possible implementations, the valve manifold 31 may further have a ninth interface a9, where the ninth interface a9 of the valve manifold 31 is connected to the electric drive pipeline 34, and a joint between the ninth interface a9 of the valve manifold 31 and the electric drive pipeline 34 is close to an output end 37 of the radiator. In this way, a range of working conditions that can be implemented by the thermal management system 10 may be increased, and whether the radiator 37 is used may be determined based on a use requirement. For example, in addition to being connected to the fifth interface a5, the second interface a2 may be further connected to the ninth interface a9, so that the second coolant in the fourth flow channel may be used to dissipate heat for the electric driver 36.

Still with reference to FIG. 3 or FIG. 4, a cooling fan 80 may be further disposed in the front-end cooling module, and the cooling fan 80 may implement heat exchange between air in the environment in which the front-end cooling module is located and the radiator 37.

Still with reference to FIG. 3 or FIG. 4, in some possible implementations, the second coolant loop 30 may further include the tank 38, where the tank 38 is connected to the electric drive pipeline 34. Because the tank 38 is a container with an opening at an upper end, gas may be filtered out by using the tank 38, and only the second coolant in a liquid state is allowed to circulate in the second coolant loop 30, to improve the cooling effect or the heating effect.

The tank 38 may be connected before the second coolant flows into the input end of the electric drive water pump 35. For example, with reference to FIG. 3, the output end of the electric driver 36 is connected to the input end of the electric drive water pump 35 through a part of the electric drive pipeline 34, and the tank 38 is connected to the electric drive pipeline 34 between the electric drive water pump 35 and the electric driver 36 (for example, a solid line between the tank 38 and the radiator 37 in FIG. 3). In addition, when the radiator 37 exists, the tank 38 may alternatively be connected to the radiator 37 (for example, a dashed line between the tank 38 and the radiator 37 in FIG. 3).

It may be understood that the tank 38 may also be included in the electric drive loop S2.

Still with reference to FIG. 3 and FIG. 4, in some possible implementations, the second coolant loop 30 may further include a battery pipeline 39, a battery water pump 40, and a battery pack 41, and the valve manifold 31 has at least eight interfaces. An input end and an output end of the battery pipeline 39 are respectively connected to the seventh interface a7 and the eighth interface a8 of the valve manifold 31. The battery water pump 40 and the battery pack 41 are separately connected in series on the battery pipeline 39. In this way, in addition to heating or cooling the passenger compartment and the electric driver 36, the thermal management system 10 may further heat or cool the battery pack 41, to increase or decrease a temperature of the battery pack 41.

An output end of the battery water pump 40 may be connected to an input end of the battery pack 41 through a part of the battery pipeline 39, or an input end of the battery water pump 40 may be connected to an output end of the battery pack 41 through a part of the battery pipeline 39. This is not limited herein.

A function of the battery water pump 40 is to enable the second coolant in the valve manifold 31 to circulate in the battery pipeline 39, so that the second coolant may heat or cool down the battery pack 41. The second coolant circulating in the battery pipeline 39 may be the second coolant in the first flow channel or the fourth flow channel. This may be specifically determined based on a heating requirement or a cooling requirement of the battery pack 41. For example, when the battery pack 41 needs to be heated, the second coolant may be the second coolant in the first flow channel.

Certainly, a loop formed by the battery pipeline 39, the battery water pump 40, and the battery pack 41 for the second coolant to flow may also be referred to as a battery loop S3.

Still with reference to FIG. 3 or FIG. 4, in some possible implementations, the second coolant loop 30 may further include a three-way valve 42, where an input end of the three-way valve 42 is connected to the output end of the heater core 43, a first output end of the three-way valve 42 is connected to the input end L11 of the first flow channel, and a second output end of the three-way valve 42 is connected to the input end of the battery water pump 40. In this way, in addition to returning to the valve manifold 31 through the first flow channel, the second coolant in the heater core 43 may further flow to the battery water pump 40 by using the three-way valve 42, so that a working condition of the thermal management system 10 may be increased.

Still with reference to FIG. 3 or FIG. 4, in some possible implementations, the input end of the battery pipeline 39 may be further connected to the input end L11 of the first flow channel, and a second one-way valve 282 is disposed between the battery pipeline 39 and the input end L11 of the first flow channel. The second one-way valve 282 is configured to enable the second coolant to flow from the seventh interface a7 of the valve manifold 31 to the input end L11 of the first flow channel. In this way, the second coolant in the heater loop S1 and the second coolant in the battery loop S3 may be mixed, and the passenger compartment and the battery pack 41 may be heated simultaneously, to meet a use requirement.

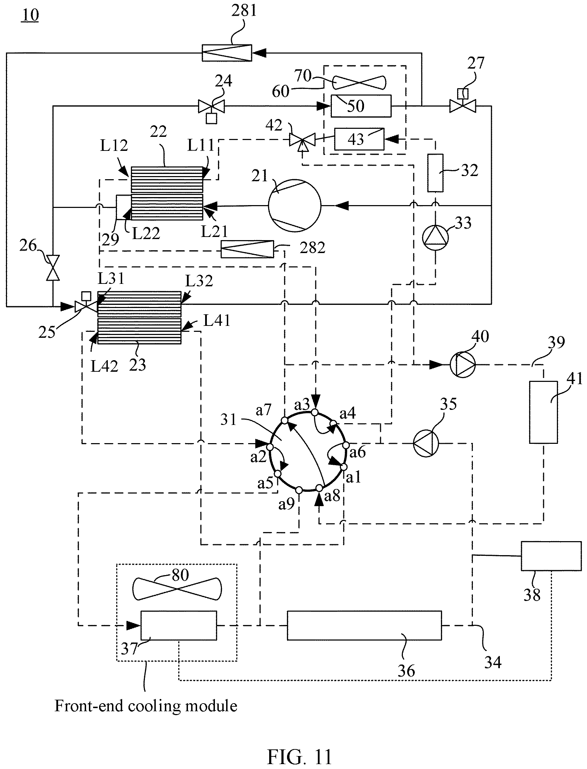

In addition to being connected to the input end L11 of the first flow channel, in some possible implementations, the input end of the battery pipeline 39 may be further connected to the output end L12 of the first flow channel. FIG. 11 is a diagram of a structure of still another thermal management system according to an embodiment of this application. With reference to FIG. 11, the input end of the battery pipeline 39 is connected to the output end L12 of the first flow channel, and a second one-way valve 282 is disposed between the battery pipeline 39 and the output end L12 of the first flow channel. The second one-way valve 282 is configured to enable the second coolant to flow from the seventh interface a7 of the valve manifold 31 to the output end L12 of the first flow channel, so that the second coolant in the heater loop S1 may be mixed with the second coolant in the battery loop S3, and the passenger compartment and the battery pack 41 may be heated simultaneously.

In conclusion, when the second coolant loop 30 includes the battery loop S3, the electric drive loop S2, and the heater loop S1, in some possible implementations, the valve manifold 31 may be a nine-way valve, and a regulating structure of the valve manifold 31 is implemented by using the nine-way valve. This may decrease pipeline design difficulty, reduce a volume occupied by the valve manifold 31, and help improve integration of the thermal management system 10.

The electric drive loop S2, the battery loop S3, the heater loop S1, and the first coolant loop 20 may be disposed in a series-parallel connection manner by using the nine-way valve, and the second coolant may meet requirements such as heating or cooling the battery pack 41, cooling the electric driver 36, and heating the passenger compartment.

In some possible implementations, the thermal management system 10 may further include an integration unit 90. The integration unit 90 means that some components and parts and pipelines of the thermal management system 10 are integrated into one module, to implement modular configuration, and help reduce a system size and a system pressure drop of the thermal management system 10.

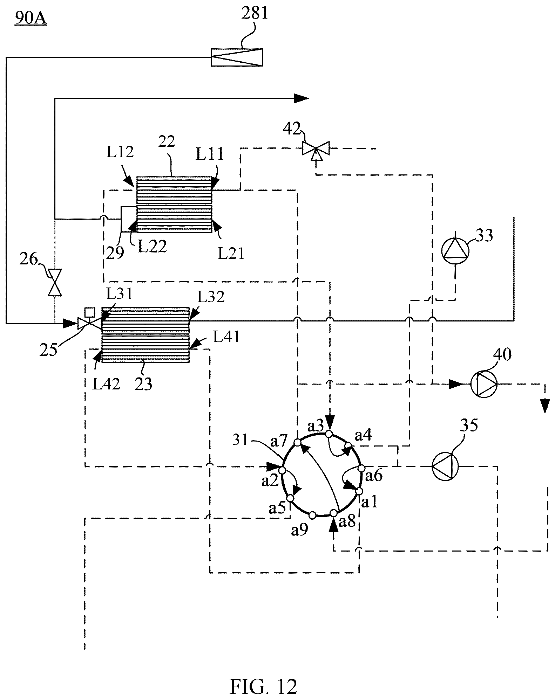

FIG. 12 is a diagram of a structure of an integration unit according to an embodiment of this application. With reference to FIG. 12, in some embodiments, the integration unit 90A may include a first heat exchanger 22, a second heat exchanger 23, a liquid storage tank 29, a first stop valve 26, a second throttle valve 25, a first one-way valve 281, a heater water pump 33, a battery water pump 40, a valve manifold 31, and pipelines.

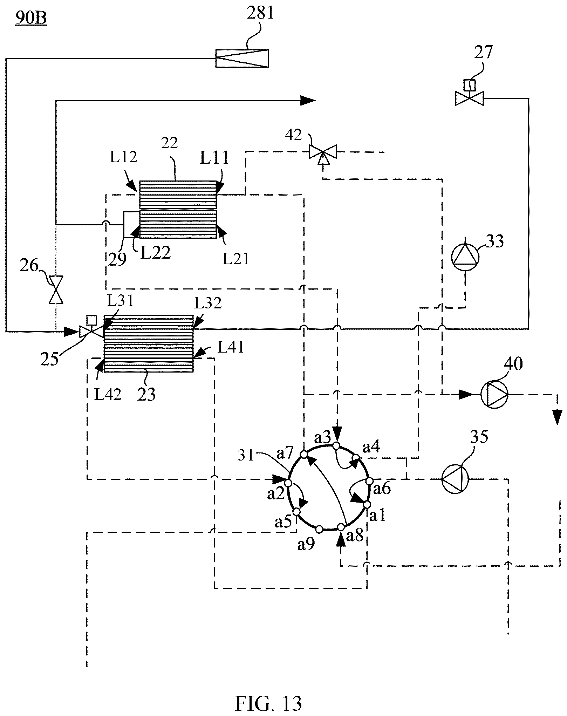

FIG. 13 is a diagram of a structure of another integration unit according to an embodiment of this application. With reference to FIG. 13, in some other embodiments, the integration unit 90B may include a first heat exchanger 22, a second heat exchanger 23, a liquid storage tank 29, a first stop valve 26, a second stop valve 27, a second throttle valve 25, a first one-way valve 281, a heater water pump 33, a battery water pump 40, an electric drive water pump 35, a valve manifold 31, and pipelines.

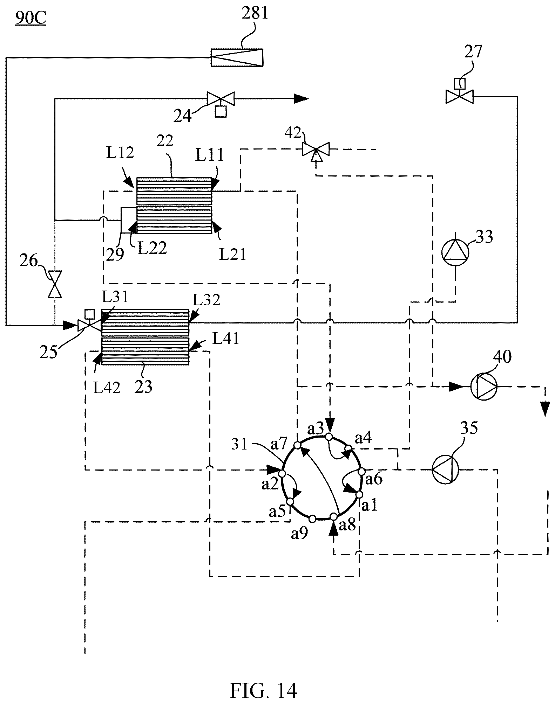

FIG. 14 is a diagram of a structure of still another integration unit according to an embodiment of this application. With reference to FIG. 14, in still some other embodiments, the integration unit 90C may include a first heat exchanger 22, a second heat exchanger 23, a liquid storage tank 29, a first stop valve 26, a second stop valve 27, a first throttle valve 24, a second throttle valve 25, a first one-way valve 281, a heater water pump 33, a battery water pump 40, an electric drive water pump 35, a valve manifold 31, and pipelines.

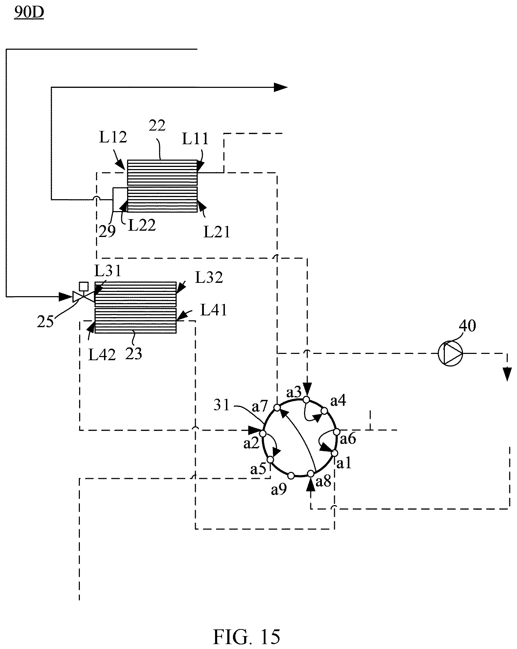

FIG. 15 is a diagram of a structure of yet another integration unit according to an embodiment of this application. With reference to FIG. 15, in yet some other embodiments, the integration unit 90D may include a first heat exchanger 22, a second heat exchanger 23, a liquid storage tank 29, a second throttle valve 25, a battery water pump 40, an electric drive water pump 35, a valve manifold 31, and pipelines.

Certainly, the components and parts and the pipelines integrated by the integration unit 90 are not limited to the foregoing combinations. Therefore, the integration unit 90 may include at least one or more of the valve manifold 31, the first heat exchanger 22, the second heat exchanger 23, the liquid storage tank 29, the first stop valve 26, the second throttle valve 25, the first one-way valve 281, the heater water pump 33, the battery water pump 40, the battery water pump 40, and the pipes.

The following further describes a structure of the thermal management system 10 provided in embodiments of this application by using a plurality of working conditions as examples.

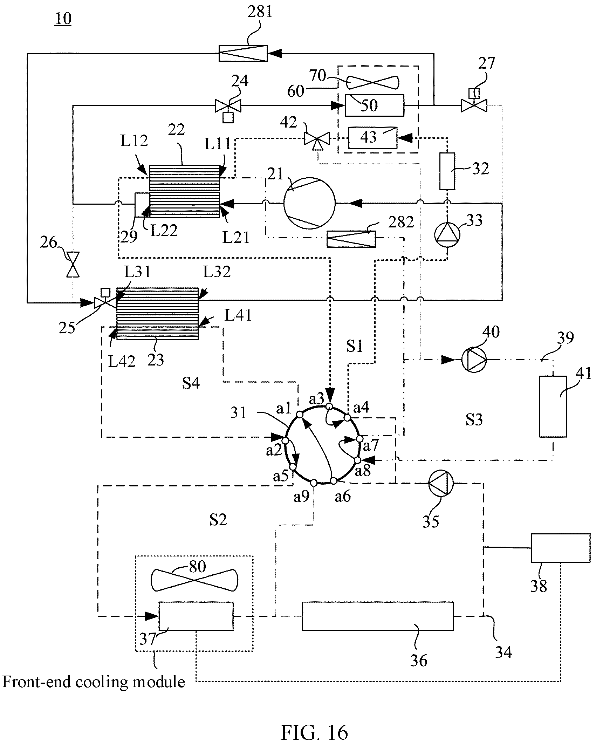

FIG. 16 is a diagram of a thermal management system in a working condition of heating a passenger compartment and heating a battery pack according to an embodiment of this application. With reference to FIG. 16, in this working condition, the thermal management system 10 operates in a heat pump mode. In a first coolant loop 20, an output end L22 of a second flow channel is disconnected from an input end L31 of a third flow channel, an output end of an evaporator core 50 is disconnected from an input end of a compressor 21, the input end L31 of the third flow channel is connected to the output end of the evaporator core 50, and an output end and the input end of the compressor 21 are respectively connected to an input end L21 of the second flow channel and the output end of the evaporator core 50. In a second coolant loop 30, an output end L12 of a first flow channel is connected to an input end of a heater core 43 by using a valve manifold 31.

In this working condition, a first coolant exchanges heat at the evaporator core 50, to implement heating of air entering the passenger compartment for a first time. A part of a second coolant obtained through heat exchange at a first heat exchanger 22 enters the heater core 43 by using the valve manifold 31, and exchanges heat with the air that has performed the first heat exchange, to implement heating of the air entering the passenger compartment for a second time, so that a temperature of the air entering the passenger compartment may be increased, to implement heating of the passenger compartment. Another part of the second coolant obtained through heat exchange at the first heat exchanger 22 enters a battery loop S3 by using the valve manifold 31, to implement heating for the battery pack 41.

In addition, in this working condition, the second coolant in a fourth flow channel may alternatively be used to dissipate heat for an electric driver 36. Certainly, in some embodiments, the electric driver 36 may alternatively be naturally cooled by using a radiator 37. Details are not described herein again.

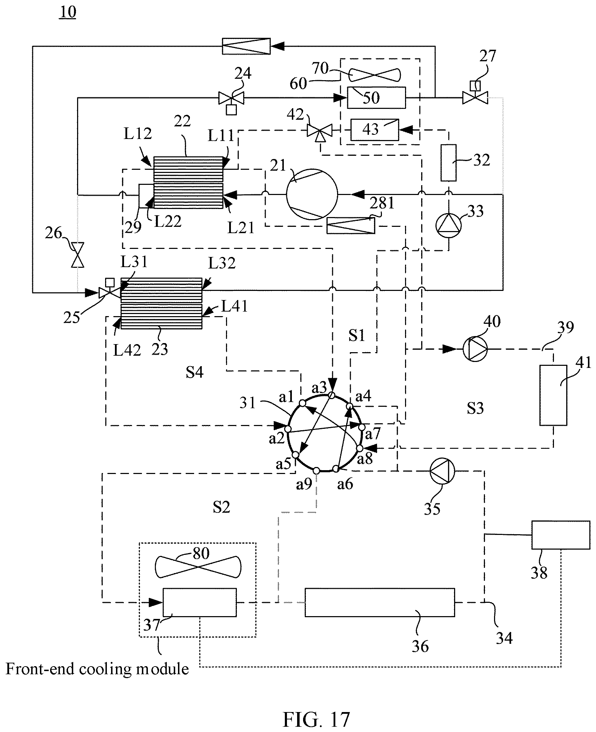

FIG. 17 is a diagram of a thermal management system in a working condition of heating a passenger compartment and cooling a battery pack according to an embodiment of this application. With reference to FIG. 17, in this working condition, in a first coolant loop 20, an output end L22 of a second flow channel is disconnected from an input end L31 of a third flow channel, an output end of an evaporator core 50 is disconnected from an input end of a compressor 21, the input end L31 of the third flow channel is connected to the output end of the evaporator core 50, and an output end and the input end of the compressor 21 are respectively connected to an input end L21 of the second flow channel and the output end of the evaporator core 50. In a second coolant loop 30, a heater loop S1 is not connected to a battery loop S3, and a fourth flow channel is connected to a battery pipeline 39 by using a valve manifold 31.

In this working condition, the first coolant exchanges heat at the evaporator core 50, to implement first heating of air entering the passenger compartment, and a second coolant in the heater core 43 exchanges heat with the air that has performed the first heat exchange, to implement heating of the air entering the passenger compartment for a second time, so that a temperature of the air entering the passenger compartment may be increased, to implement heating of the passenger compartment. The second coolant in the fourth flow channel flows into the battery loop S3 by using the valve manifold 31, to cool the battery pack 41.

It should be noted that, when the passenger compartment is heated and the battery pack 41 is cooled, an electric driver 36 may also be cooled by using the second coolant in the fourth flow channel, or heat generated by the electric driver 36 may be dissipated into an environment by using a radiator 37, to implement natural cooling of the electric driver 36.

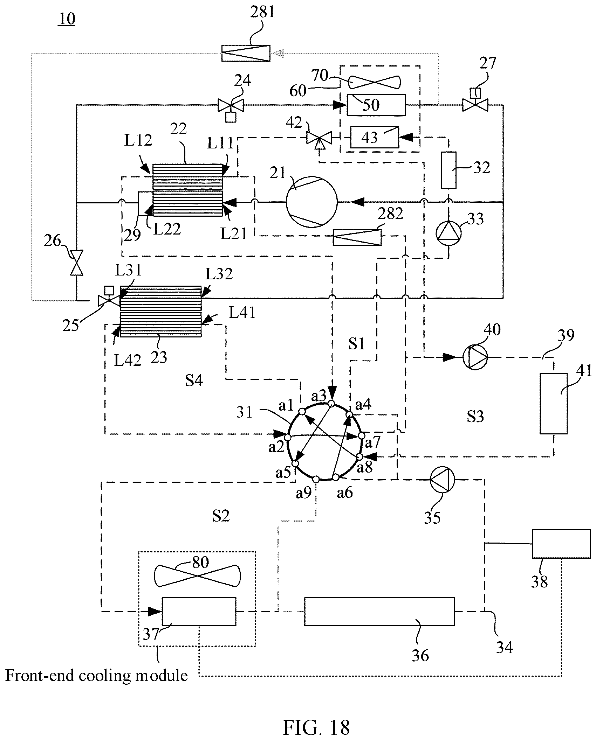

FIG. 18 is a diagram of a thermal management system in a working condition of cooling a passenger compartment and cooling a battery pack according to an embodiment of this application. With reference to FIG. 18, in this working condition, in a first coolant loop 20, an output end L22 of a second flow channel is connected to an input end L31 of a third flow channel, an output end of an evaporator core 50 is connected to an input end of a compressor 21, the input end L31 of the third flow channel is disconnected from the output end of the evaporator core 50, and an output end and the input end of the compressor 21 are respectively connected to an input end L21 of the second flow channel and the output end of the evaporator core 50.

In this working condition, a first coolant exchanges heat at a first heat exchanger 22, and a temperature of the first coolant is decreased. Then, a part of the first coolant enters the evaporator core 50 and absorbs heat carried by air entering the passenger compartment, to implementing cooling of the passenger compartment. A part of the first coolant enters the third flow channel and exchanges heat with a second coolant in a fourth flow channel, to decrease a temperature of the second coolant, and obtain a low-temperature second coolant. The low-temperature second coolant enters a battery pipeline 39 by using a valve manifold 31, to implement heat dissipation of the battery pack 41.

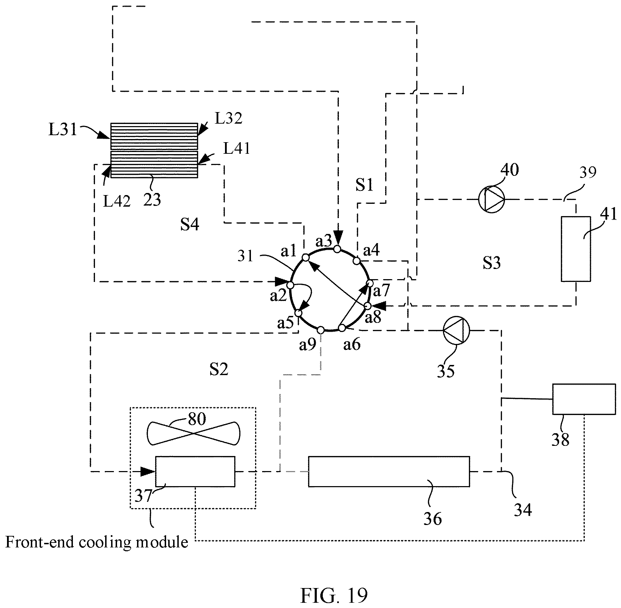

FIG. 19 is a diagram of a thermal management system in a working condition of naturally cooling a battery pack according to an embodiment of this application. In this working condition, an input end L31 of a third flow channel is disconnected from an output end L22 of a second flow channel, the output end L22 of the second flow channel is connected to an input end of an evaporator core 50, and an output end of the evaporator core 50 is disconnected from an input end of a compressor 21 and is connected to the input end L31 of the third flow channel, to heat the passenger compartment. Therefore, this is not shown in the figure. A connection relationship of some interfaces of a valve manifold 31 is shown in FIG. 19, so that the fourth flow channel, a battery loop S3, and an electric drive loop S2 having a radiator 37 are connected in series by using the valve manifold 31 to form a natural cooling loop. The natural cooling loop is driven by at least one of a battery water pump 40 and an electric drive water pump 35. Heat generated by the battery pack 41 and an electric driver 36 increases a temperature of a second coolant, and the temperature of the second coolant is decreased after passing through the radiator 37. That is, heat dissipation is implemented for the electric driver 36 and the battery pack 41 by using the radiator 37.

It may be summarized from the foregoing plurality of working condition modes that, a loop combination of a flow direction of the second coolant in a second coolant loop 30 depends formally on a connection relationship between interfaces of the valve manifold 31. That is, the valve manifold 31 has a plurality of connection modes to correspond to a plurality of working conditions. In addition, arrangement may be performed based on a heating requirement or a cooling requirement of the battery pack 41. For example, the battery loop S3 may form a loop by itself to implement temperature equalization of the battery pack 41. Alternatively, a heater loop S1 is connected in series to the battery loop S3 or a fourth flow channel, and when the second coolant loop 30 does not participate in heat exchange, temperature equalization of the battery pack 41 may also be implemented.

In the foregoing content, a flow direction of the first coolant and a flow direction of the second coolant may be combined to form a plurality of working conditions, a quantity of working conditions is large, and the working conditions cannot be exhaustively listed one by one. The working conditions described in the foregoing figures are merely examples of typical working conditions. In addition to these examples, functions covered by other combinations also fall within the protection scope of embodiments of this application.

It should be noted that, in embodiments of this application, a position relationship between components of the thermal management system 10 is merely an example, and does not constitute a limitation on an actual position. As shown in FIG. 3, a flow direction of the first coolant passing through the first heat exchanger 22 is a forward flow direction, and is from right to left. One of the purposes of such arrangement is to facilitate drawing, and does not constitute a limitation. Therefore, based on accompanying drawings of this application, the flow direction of the first coolant may be changed. For example, the input end L11 of the first flow channel is close to the output end of the compressor 21 (a forward-flow direction), but the input end L11 of the first flow channel may alternatively be disposed away from the output end of the compressor 21 (the flow direction of the first coolant passing through the first heat exchanger 22 is a reverse-flow direction).

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A thermal management system, comprising: a first coolant loop and a second coolant loop, wherein
the first coolant loop comprises a compressor, a first heat exchanger, and a second heat exchanger;
the first heat exchanger comprises a first flow channel and a second flow channel that are isolated from each other, and the second heat exchanger comprises a third flow channel and a fourth flow channel that are isolated from each other;
an input end of the compressor is connected to an output end of the third flow channel and is configured to be connected to an output end of an evaporator core disposed on a vehicle, and an output end of the compressor is connected to an input end of the second flow channel;
an input end of the first flow channel is configured to be connected to an output end of a heater core of the vehicle;
an output end of the second flow channel is connected to an input end of the third flow channel, and the output end of the second flow channel is further configured to be connected to an input end of the evaporator core;
the input end of the third flow channel is further configured to be connected to the output end of the evaporator core;
the second coolant loop comprises a valve manifold having at least four interfaces;
a first interface and a second interface of the valve manifold are respectively connected to an input end and an output end of the fourth flow channel, a third interface of the valve manifold is connected to an output end of the first flow channel, and a fourth interface of the valve manifold is configured to be connected to an input end of the heater core; and
the thermal management system is configured with at least a heat pump mode, and when the thermal management system operates in the heat pump mode, a first coolant in the first flow channel flows into the evaporator core and exchanges heat with air around the evaporator core, and the heat-exchanged first coolant returns to the compressor through the third flow channel, wherein the air that has exchanged heat with the first coolant in the evaporator core further exchanges heat with a second coolant in the heater core.

2. The thermal management system according to claim 1, wherein the first coolant loop further comprises a first throttle valve and a second throttle valve;
the output end of the second flow channel is connected to the input end of the evaporator core by using the first throttle valve; and
the input end of the third flow channel is connected to both the output end of the second flow channel and the output end of the evaporator core by using the second throttle valve.

3. The thermal management system according to claim 1 or 2, wherein the first coolant loop further comprises a first stop valve and a second stop valve;
the output end of the second flow channel is connected to the input end of the third flow channel by using the first stop valve; and
the input end of the compressor is connected to the output end of the evaporator core by using the second stop valve.

4. The thermal management system according to any one of claims 1 to 3, wherein the first coolant loop further comprises a first one-way valve, the output end of the evaporator core is connected to the input end of the third flow channel by using the first one-way valve, and the first one-way valve is configured to enable the first coolant to flow from the output end of the evaporator core to the input end of the third flow channel.

5. The thermal management system according to any one of claims 1 to 4, wherein the first coolant loop further comprises a liquid storage tank, an input end of the liquid storage tank is connected to the output end of the second flow channel, and an output end of the liquid storage tank is connected to both the input end of the third flow channel and the input end of the evaporator core.

6. The thermal management system according to any one of claims 1 to 5, wherein the second coolant loop further comprises an electric heater and a heater water pump; an input end of the electric heater is connected to an output end of the heater water pump, and an output end of the electric heater is connected to the input end of the heater core; and an input end of the heater water pump is connected to the fourth interface of the valve manifold.

7. The thermal management system according to any one of claims 1 to 6, wherein the valve manifold has at least six interfaces, and the second coolant loop further comprises: an electric drive pipeline, an electric drive water pump, and an electric driver; and
an input end of the electric drive pipeline is connected to a fifth interface of the valve manifold, an output end of the electric drive pipeline is connected to a sixth interface of the valve manifold, and the electric drive water pump and the electric driver are separately connected in series on the electric drive pipeline.

8. The thermal management system according to claim 7, wherein the second coolant loop further comprises a radiator, and the input end of the electric drive pipeline is connected to the fifth interface of the valve manifold by using the radiator.

9. The thermal management system according to claim 7 or 8, wherein the second coolant loop further comprises a tank, and the tank is connected to the electric drive pipeline.

10. The thermal management system according to any one of claims 1 to 8, wherein the second coolant loop further comprises: a battery pipeline, a battery water pump, and a battery pack, and the valve manifold has at least eight interfaces;
an input end and an output end of the battery pipeline are respectively connected to a seventh interface and an eighth interface of the valve manifold; and
the battery water pump and the battery pack are separately connected in series on the battery pipeline.

11. The thermal management system according to claim 10, wherein the seventh interface of the valve manifold is further connected to the input end of the first flow channel by using a second one-way valve, and the second one-way valve is configured to enable the second coolant to flow from the seventh interface of the valve manifold to the input end of the first flow channel.

12. The thermal management system according to claim 10 or 11, wherein the second coolant loop further comprises a three-way valve, an input end of the three-way valve is connected to the output end of the heater core, a first output end of the three-way valve is connected to the input end of the first flow channel, and a second output end of the three-way valve is connected to an input end of the battery water pump.

13. The thermal management system according to any one of claims 1 to 12, wherein the valve manifold is a nine-way valve.

14. The thermal management system according to any one of claims 1 to 13, wherein the thermal management system further comprises an integration unit; and one or more of the valve manifold, the first heat exchanger, and the second heat exchanger are integrated in the integration unit.

15. A vehicle, comprising a vehicle body and the thermal management system according to any one of claims 1 to 14, wherein the thermal management system is mounted on the vehicle body;
the vehicle body comprises a passenger compartment, an air conditioning box, a heater core, and an evaporator core, wherein an air outlet of the air conditioning box communicates with the passenger compartment, the heater core is disposed in the air conditioning box and is close to the air outlet of the air conditioning box, and the evaporator core is disposed in the air conditioning box and is close to an air inlet of the air conditioning box; and
when the thermal management system operates in a heat pump mode, an output end of a second flow channel of the thermal management system is connected to an input end of the evaporator core, an output end of the evaporator core is connected to an input end of a third flow channel of the thermal management system, an output end of the third flow channel is connected to an input end of a compressor of the thermal management system, and an output end of the compressor is connected to an input end of the second flow channel.
